# EUROPEAN PATENT SPECIFICATION

(11) **EP 0 751 837 B1**
(45) Date of publication and mention of the grant of the patent: **17.01.2001**
(21) Application number: 95914642.4
(22) Date of filing: 23.03.1995
(51) Int. Cl.: B05D 5/00, C08L 5/00, C09D 5/00

(54) **PROTECTIVE POLYSACCHARIDE FILM**
POLYSACCHARIDESCHUTZFILM
FILM DE PROTECTION EN POLYSACCHARIDE

(30) Priority: 23.03.1994 SE 9400977
(43) Date of publication of application: 08.01.1997
(73) Proprietor: Polysaccharide Industries Aktiebolag PSI, 161 71 Bromma (SE)
(72) Inventor: SVENSSON, Sigfrid, B-1060 Bryssel (BE)
(74) Representative: Larsson, Kjell
(86) International application number: SE9500308
(87) International publication number: WO9525605

(56) References cited:
- US-A- 5 017 237
- US-A- 5 093 485

## Description

The present invention relates to protective polysaccharide films intended for the protection of surfaces subject to environmental pollution or destruction including also graffiti type of contamination. The invention also involves a solution for providing such protective films and a process for the protection of surfaces.

Many types of surfaces are adversely affected by different kinds of pollutions. Among pollutants that freqently occur there may be mentioned traffic pollutants, oil, bird droppings and dead insects. Furthermore, a very frequently occurring pollutant is constituted by so called acid rain, occurring from gases generated by the burning of fossile fuels, such as coal, oil and turf, i.e. carbon dioxide, sulphur dioxide, sulphur trioxide and nitrous gases, which dissolve in rain water to form an acid rain. This rain is the major cause of corrosion of different types of surfaces and construction materials.

In EP B1 0 365 584 there is described a process facilitating the removal of undesired contamination from a surface. According to the disclosure of said EP this process is based on the use of a sacrificial polysaccharide coating capable of redissolving and swelling, whereby undesired contamination can be removed by washing away the dissolved or swelled surface layer of the film. Although the process of said European patent performs in a satisfactory manner with regard to facilitating removal of contamination that may be occurring, such as graffiti, it may yield under prolonged attack from for example acid rain, whereby the polysaccharide film can be penetrated so that the substrate carrying the film will be subjected to damage.

Another document relating to film-forming techniques using solutions containing polysaccharides is US patent 5,093,485. Here a polysaccharide-based composition comprises at least two polysaccharide components interacting to provide for desirable properties when using such composition in aqueous solutions, such as for facilitating removal of undesired contamination from surfaces. However, also in this case, the disclosure is silent with regard to the use of buffering substances resulting in the formation of films which are capable of substantially resisting pH changes due to environmental influence, such as by acid rain.

The principal object of the present invention is to provide new techniques, whereby the resistance of a polysaccharide film covering a substrate to be protected against different types of pollution will be greatly improved.

Another object of the invention is to provide new coating techniques, whereby facile removal of undesired contamination from a surface in accordance with the disclosure of European patent 0 365 584 can be maintained while a better resistance to environmental pollution will be gained.

Yet another object of the invention is to provide a protective polysaccharide film and a solution for preparing such film on a substrate to be protected.

In accordance with the present invention it has now been found that due to the property of a polysaccharide coating in contact with water to swell or absorb water it is possible by incorporation into the polysaccharide coating to efficiently neutralize acid rain and other pollutants that would normally change the pH of the coating on the substrate, thereby unfavourably affecting the substrate protected by such coating. Accordingly, the invention provides for a protective polysaccharide film containing a buffering agent in an amount which is effective for substantially resisting pH changes due to environmental influence.

With regard to details concerning the preparation of protective polysaccharide films reference is made to the above-identified EP B1 0 365 584. Among preferred poly-saccharides for use in making the desired films there may be mentioned celluloses and derivatives thereof; starches and derivatives thereof; plant gums; capsular microbial polysaccharides; pectins; inulins; and algal polysaccharides.

The buffering system used for improving the resistance of the polysaccharide film against environmental influence can be based on conventional buffering agents, such as agents selected from weak acids and salts thereof, mixtures of acid salts and neutral salts thereof and mixtures of two acid salts. Such traditional buffers are of the low molecular weight type and can be exemplified by acetates, phosphates, and borates, respectively. However, also high molecular weight types of buffers can be used, such as proteins, for example albumins.

For maintaining a pH around neutral in the polysaccharide film according to the present invention the buffer may be selected from phosphates. In order to maintain a basic pH the buffer may be selected from borates, and if it is desired to maintain an acid pH the buffer may be selected from acetates.

The present invention also provides for a solution for the application onto a surface to be protected, such a solution comprising:
a) a polysaccharide dissolved in an aqueous solvent therefor; and
b) a buffering agent, said solution being capable of forming a film on said surface which on swelling or dissolution maintains a substantially constant pH due to environmental influence.

It is preferred that such solution contains the polysaccharide in a concentration of at least about 0.1% (w/v), particularly at least about 0,5%. The upper limit for the concentration is not critical, but it is preferred that the solution contains the polysaccharide in a concentration of at most about 10% (w/v), particularly at most about 5%.

With regard to the contents of the buffering agent in the solution it shall not be as high as to disturb the structure of the polysaccharide film and it is preferred that said agent is present in an amount on a weight basis of less than about the amount of polysaccharide. It is particularly preferred that the buffering agent is present in an amount less than about 50% of the amount of polysaccharide.

The invention also provides for a process for protecting a surface from non-desired contamination and for facilitating the removal of such contamination from said surface, said process comprising the steps:
a) applying a solution according to the above definition on said surface before being subjected to contamination;
b) allowing the applied solution to dry with the formation of a solid film on said surface, said film being capable of substantially resisting pH changes due to environmental influence;
c) treating said film with a liquid capable of redissolving the film or providing swelling thereof; and
d) removing the undesired contamination by completely or partially removing said film from the surface.

For obvious reasons it is particularly preferred that the solvent system used for carrying out the present invention is an aqueous system. This is so for two reasons; first, the pH-controlling effect is normally associated with an aqueous system and, second, the environmental aspect favours the use of an aqueous system.

On certain types of surfaces, such as metal and glass surfaces, it may be preferred to use a primer before applying the polysaccharide solution onto the surface. Such primer improving adhesion of the polysaccharide film can be constituted by polymin, which is a polymer cation ten-side sold by BASF, Germany, under the tradename Polymin SN®.

The techniques involved in the present invention find many applications, such as protection of building facades against corrosion due to acid rain and corrosion due to bird droppings, protection for cars or the like during transportation, protection of concrete against carbonization due to atmospheric carbon dioxide, etc.

The present invention will be further illustrated in the following by specific examples which are not to be construed as limiting the scope of the invention. In the examples percentages are based on weight by volume if not indicated otherwise.

### EXAMPLE 1

An aqueous polysaccharide solution is prepared containing 1.5% Locust bean gum (Sigma), and the buffering system of the solution is based on a 0.02 Molar phosphate buffer, pH 7.0. Said solution is sprayed onto an aluminum sheet in an amount of 0.5 l/m², and the applied solution is allowed to dry forming a transparent film.

To an area of 1 dm² of the polysaccharide film there is added 1 ml of acid water, pH 3. The water is absorbed into the film surface during about 1 h, and after another 3 h at room temperature the surface is dry again. After 7 days the film is removed from the substrate and comminuted into a powder. The resulting powder is suspended in water and the pH of the water is about neutral. Thus, no significant change in pH can be observed.

A corresponding test but using a polysaccharide solution not containing a phosphate buffer results in a significant increase in acidity of the water wherein the corresponding film powder is suspended.

### EXAMPLE 2

Example 1 is repeated but using Guar gum (Sigma) instead of Locust bean gum as a polysaccharide. Before the application of the polysaccharide solution onto a glass surface the surface is primed using Polymin SN® for improving the adhesion of the polysaccharide film. In this example there is absorbed onto the surface of the dry film an aqueous solution of seagull droppings (5 g in 5 ml water). No significant change in pH is observed in water wherein film powder is suspended.

### EXAMPLE 3

Three concrete slabs 30x30x6 cm are sprayed with a solution containing 1.5% of Locust bean gum (Sigma) and phosphate buffer at 0.02 M, pH 7.0. The solution is sprayed in an amount of about 0.5 l/m². After drying in room temperature for 14 days the diffusion of carbon dioxide through the coating is measured by the method of Klopfer-Engelfried. It is found that the coating reduces the diffusion of carbon dioxide by a factor of 4.8.

### EXAMPLE 4

Example 1 is repeated but with a substrate of concrete and the use of soluble starch as a polysaccharide. The dry polysaccharide film is treated with water of pH 12 and no significant change in pH is observed when repeating the test procedure of Example 1.

### EXAMPLE 5

Two candlesticks of silver are thoroughly polished. One of the candlesticks is sprayed with an aqueous solution containing 1.5% of Locust bean gum (Sigma) and being 0.02 M in regard to phosphate buffer, pH 7.0. After drying the candlesticks are kept at room temperature in a normal living room environment. The candlesticks are inspected quarterly. After 3 months the candlestick treated with a film containing no buffer showed extensive darkening (brownish-black), whereas the candlestick protected by a film containing buffer shows no signs of darkening. After one year the the candlestick protected without the use of a buffer is completely brownish-black, whereas the candlestick treated in accordance with the invention still shows no sign of darkening. After 2 years the candlestick not treated in accordance with the invention is completely black, whereas the other candlestick is still intact with no signs of darkening on the surface thereof.

### EXAMPLE 6

Example 1 is repeated using chitosan (Sigma) as a 1% by weight solution in 0.5 N AcOH. Substantially the same results are obtained.

### EXAMPLE 7

Example 1 is repeated using hydroxyethyl cellulose (Cellosize WP-40) as a polysaccharide. Similar results are obtained.

### EXAMPLE 8

Example 1 is repeated using native dextran (Pharmacia, Sweden) as a 5% by weight solution. Substantially equal results are obtained.

### EXAMPLE 9

Example 1 is repeated using xanthan gum (Sigma) as an aqueous solution at 1% by weight. Similar results are obtained.

### EXAMPLE 10

Example 1 is repeated using Pullulan (Sigma) as a 1% by weight aqueous solution. Substantially equal results are obtained.

### EXAMPLE 11

Example 1 is repeated using Pectin (Sigma) in a concentration of 2% by weight, aqueous solution. Similar results are obtained.

## Claims

1. A protective polysaccharide film characterized by containing a buffering agent in an amount which is effective for substantially resisting pH changes in said film which are due to environmental influence.

2. A film according to claim 1, wherein said polysaccharide is selected from celluloses and derivatives thereof; starches and derivatives thereof; plant gums; capsular microbial polysaccharides; pectins; inulins; and algal polysaccharides.

3. A film according to claim 1 or 2, wherein said buffering agent is selected from a weak acid and a salt thereof; a mixture of an acid salt and a neutral salt thereof; and a mixture of two acid salts, such as acetates, phosphates, borates, and albumins.

4. A film according to claim 3, wherein the buffer is selected from phosphates to maintain a pH around neutral.

5. A film according to claim 3, wherein the buffer is selected from borates to maintain a basic pH.

6. A film according to claim 3, wherein the buffer is selected from acetates to maintain an acid pH.

7. A solution for the application onto a surface to be protected, comprising a polysaccharide dissolved in an aqueous solvent therefor characterized in that it contains a buffering agent, said solution being capable of forming a film on said surface which on swelling or dissolution maintains a substantially constant pH due to environmental influence.

8. A solution according to claim 7, containing said polysaccharide in a concentration of at least about 0.1% (w/v).

9. A solution according to claim 7 or 8, containing said polysaccharide in a concentration of at most about 10% (w/v), particularly at most about 5% (w/v).

10. A solution according to any of claims 7 to 9, wherein said buffering agent is present in an amount on a weight basis of less than the amount of polysaccharide.

11. A solution according to any of claims 7 to 10, wherein said polysaccharide is selected from celluloses and derivatives thereof; starches and derivatives thereof; plant gums; capsular microbial polysaccharides; pectins; inulins; and algal polysaccharides.

12. A solution according to any of claims 7 to 11, wherein said buffering agent is selected from a weak acid and a salt thereof; a mixture of an acid salt and a neutral salt thereof; and a mixture of two acid salts, such as acetates, phosphates, borates, and albumins.

13. A process for protecting a surface from non-desired contamination and to facilitate the removal of such contamination from said surface, comprising the steps:
a) applying a solution comprising a polysaccharide in an aqueous solvent therefor on said surface before being subjected to contamination;
b) allowing the applied solution to dry with the formation of a solid film on said surface;
c) treating said film with a liquid capable of redissolving the film or providing swelling thereof; and
d) removing the undesired contamination by completely or partially removing said film from the surface characterized by applying a solution according to any of claims 7 to 12, the film formed being capable of substantially resisting pH changes due to environmental influence.

14. A process according to claim 13, wherein said solution is an aqueous solution.

15. A process according to claim 13 or 14, wherein the liquid used in step c) is an aqueous liquid.

## Patentansprüche

1. Polysaccharid-Schutzfilm, dadurch gekennzeichnet, daß er ein Puffermittel in einer Menge enthält, die im wesentlichen eine Beständigkeit gegenüber auf Umwelteinflüsse zurückzuführende pH-Änderungen in dem Film bewirkt.

2. Film gemäß Anspruch 1, bei dem das Polysaccharid ausgewählt ist aus Cellulosen und Derivaten davon, Stärken und Derivaten davon, Pflanzengummen, kapselförmigen mikrobiellen Polysacchariden, Pektinen, Inulinen und Algenpolysacchariden.

3. Film gemäß Anspruch 1 oder 2, bei dem das Puffermittel ausgewählt ist aus einer schwachen Säure und einem Salz davon, einer Mischung aus einem sauren Salz und einem neutralen Salz davon, und einer Mischung aus zwei sauren Salzen, wie z.B. Acetaten, Phosphaten, Boraten und Albuminen.

4. Film gemäß Anspruch 3, bei dem der Puffer ausgewählt ist aus Phosphaten, um einen etwa neutralen pH-Wert aufrechtzuerhalten.

5. Film gemäß Anspruch 3, bei dem der Puffer ausgewählt ist aus Boraten, um einen basischen pH-Wert aufrechtzuerhalten.

6. Film gemäß Anspruch 3, bei dem der Puffer ausgewählt ist aus Acetaten, um einen sauren pH-Wert aufrechtzuerhalten.

7. Lösung zum Auftragen auf eine zu schützende Oberfläche, umfassend ein Polysaccharid, das in einem wäßrigen Lösungsmittel dafür gelöst ist, dadurch gekennzeichnet, daß ein Puffermittel enthalten ist, wobei die Lösung in der Lage ist, auf der Oberfläche einen Film auszubilden, der beim Aufquellen oder Auflösen unter Umwelteinflüssen einen im wesentlichen konstanten pH-Wert aufrechterhält.

8. Lösung gemäß Anspruch 7, die das Polysaccharid in einer Konzentration von wenigstens etwa 0,1% (Gew./Vol.) enthält.

9. Lösung gemäß Anspruch 7 oder 8, die das Polysaccharid in einer Konzentration von höchstens etwa 10% (Gew./Vol.), insbesondere höchstens etwa 5% (Gew./Vol.), enthält.

10. Lösung gemäß irgendeinem der Ansprüche 7 bis 9, bei der das Puffermittel in einer Menge vorliegt, die, bezogen auf das Gewicht, geringer ist als die Menge an Polysaccharid.

11. Lösung gemäß irgendeinem der Ansprüche 7 bis 10, bei der das Polysaccharid ausgewählt ist aus Cellulosen und Derivaten davon, Stärken und Derivaten davon, Pflanzengummen, kapselförmigen mikrobiellen Polysacchariden, Pektinen, Inulinen und Algenpolysacchariden.

12. Lösung gemäß irgendeinem der Ansprüche 7 bis 11, bei der das Puffermittel ausgewählt ist aus einer schwachen Säure und einem Salz davon, einer Mischung aus einem sauren Salz und einem neutralen Salz davon, und einer Mischung aus zwei sauren Salzen, wie z.B. Acetaten, Phosphaten, Boraten und Albuminen.

13. Verfahren zum Schutz einer Oberfläche vor unerwünschter Kontaminierung und zur Erleichterung der Entfernung einer solchen Kontaminierung von der Oberfläche, umfassend die Schritte:
a) Auftragen einer Lösung, die ein Polysaccharid in einem wäßrigen Lösungsmittel dafür umfaßt, auf die Oberfläche, bevor diese der Kontaminierung ausgesetzt wird,
b) Trocknenlassen der aufgetragenen Lösung unter Bildung eines festen Films auf der Oberfläche,
c) Behandeln des Films mit einer Flüssigkeit, die in der Lage ist, den Film wieder aufzulösen oder ihn aufquellen zu lassen, und
d) Entfernen der unerwünschten Kontaminierung durch vollständiges oder teilweises Entfernen des Films von der Oberfläche, gekennzeichnet durch Auftragen einer Lösung gemäß irgendeinem der Ansprüche 7 bis 12, wobei der gebildete Film in der Lage ist, gegen pH-Änderungen, die auf Umwelteinflüsse zurückzuführen sind, im wesentlichen beständig zu sein.

14. Verfahren gemäß Anspruch 13, bei dem die Lösung eine wäßrige Lösung ist.

15. Verfahren gemäß Anspruch 13 oder 14, bei dem die in Schritt c) verwendete Flüssigkeit eine wäßrige Flüssigkeit ist.

## Revendications

1. Film de protection en polysaccharide caractérisé en ce qu'il contient un agent tampon en une quantité efficace pour résister substantiellement aux changements de pH dans ledit film qui sont dus à l'influence de l'environnement.

2. Film selon la revendication 1, dans lequel ledit polysaccharide est choisi parmi les celluloses et leurs dérivés; les amidons et leurs dérivés; les gommes végétales; les polysaccharides capsulaires microbiens; les pectines; les inulines; et les polysaccharides d'algues.

3. Film selon la revendication 1 ou 2, dans lequel ledit agent tampon est choisi parmi un acide faible et un sel de celui-ci; un mélange d'un sel d'acide et d'un sel neutre de celui-ci; et un mélange de deux sels d'acide, tels que les acétates, phosphates, borates et albumines.

4. Film selon la revendication 3, dans lequel le tampon est choisi parmi les phosphates pour maintenir un pH voisin du pH neutre.

5. Film selon la revendication 3, dans lequel le tampon est choisi parmi les borates pour maintenir un pH basique.

6. Film selon la revendication 3, dans lequel le tampon est choisi parmi les acétates pour maintenir un pH acide.

7. Solution destinée à l'application sur une surface à protéger, comprenant un polysaccharide dissous dans un solvant aqueux prévu à cet effet, caractérisée en ce qu'elle contient un agent tampon, ladite solution étant susceptible de former un film sur ladite surface qui, par gonflement ou par dissolution, maintient un pH substantiellement constant sous l'influence de l'environnement.

8. Solution selon la revendication 7, contenant ledit polysaccharide en une concentration d'au moins environ 0,1% (p/v).

9. Solution selon la revendication 7 ou 8, contenant ledit polysaccharide en une concentration au maximum d'environ 10% (p/v), en particulier au maximum d'environ 5% (p/v).

10. Solution selon l'une quelconque des revendications 7 à 9, dans laquelle ledit agent tampon est présent en une quantité sur une base pondérale inférieure à celle du polysaccharide.

11. Solution selon l'une quelconque des revendications 7 à 10, dans laquelle ledit polysaccharide est choisi parmi les celluloses et leurs dérivés; les amidons et leurs dérivés; les gommes végétales; les polysaccharides capsulaires microbiens; les pectines; les inulines; et les polysaccharides d'algues.

12. Solution selon l'une quelconque des revendications 7 à 11, dans laquelle ledit agent tampon est choisi parmi un acide faible et un sel de celui-ci; un mélange d'un sel d'acide et d'un sel neutre de celui-ci; et un mélange de deux sels d'acide, tels que les acétates, phosphates, borates et albumines.

13. Procédé pour protéger une surface d'une contamination non souhaitée et pour faciliter l'élimination d'une telle contamination de ladite surface, comprenant les étapes consistant à:
a) appliquer sur ladite surface, avant qu'elle n'ait fait l'objet d'une contamination, une solution comprenant un polysaccharide dans un solvant aqueux prévu pour celui-ci;
b) laisser sécher la solution appliquée en formant un film solide sur ladite surface;
c) traiter ledit film avec un liquide capable de redissoudre le film ou de le gonfler; et
d) éliminer la contamination indésirable en enlevant complètement ou partiellement ledit film de la surface, le procédé étant caractérisé par l'application d'une solution selon l'une quelconque des revendications 7 à 12, le film formé étant capable de résister substantiellement aux changements de pH dus à l'influence de l'environnement.

14. Procédé selon la revendication 13, dans lequel ladite solution est une solution aqueuse.

15. Procédé selon la revendication 13 ou 14, dans lequel le liquide utilisé dans l'étape c) est un liquide aqueux.
